# FASCICULE DE BREVET EUROPEEN

(11) **EP 0 794 350 B1**
(45) Date de publication et mention de la délivrance du brevet: **02.10.2002**
(21) Numéro de dépôt: 97400352.7
(22) Date de dépôt: 17.02.1997
(51) Int. Cl.: F16F 7/12, B60R 19/34

(54) **Dispositif absorbeur de chocs notamment pour véhicules automobiles**
Stossabsorbierende Vorrichtung
Shock absorbing device especially for motor vehicles

(30) Priorité: 04.03.1996 FR 9602688
(43) Date de publication de la demande: 10.09.1997
(73) Titulaire: AUTOMOBILES PEUGEOT, 75116 Paris (FR); AUTOMOBILES CITROEN, 92200 Neuilly-sur-Seine (FR)
(72) Inventeur: Faidy, Jean-Pierre, 92410 Ville D'Avray (FR); Chevrier, Jean-Claude, 92290 Chatenay-Malabry (FR)
(74) Mandataire: Lanceplaine, Jean-Claude

(56) Documents cités:
- EP-A- 0 647 794
- EP-A- 0 652 388
- DE-A- 2 149 091
- DE-A- 4 206 717
- DE-A- 4 241 103
- DE-C- 19 511 867
- DE-U- 9 311 163
- GB-A- 884 953
- GB-A- 2 059 006
- GB-A- 2 278 580
- US-A- 3 599 757
- US-A- 4 531 619

## Description

La présente invention a pour objet un dispositif absorbeur de chocs, notamment pour véhicules automobiles.

Les véhicules automobiles peuvent être équipés de dispositifs absorbeurs de chocs disposés entre deux éléments du véhicule et le plus souvent entre le pare-chocs avant et/ou le pare-chocs arrière et chaque longeron de ce véhicule.

Ces dispositifs absorbeurs de chocs sont de différents types.

Un type d'absorbeurs de chocs connu, voir GB-A- 884 953, (selon les preambules des revendications 1 à 4) comporte deux tubes de différents diamètres reliés respectivement à l'un des éléments et à l'autre desdits éléments du véhicule.

Le tube de plus petit diamètre est muni à son extrémité libre d'un rebord replié vers l'extérieur et relié à l'extrémité libre du tube de plus grand diamètre.

Le tube de plus petit diamètre se déforme par retournement avec augmentation de diamètre permettant ainsi d'absorber l'énergie lors d'un choc.

Dans un autre type d'absorbeurs de chocs, voir GB-A- 884 953, comportant également deux tubes de différents diamètres, le tube de plus grand diamètre comporte à son extrémité libre un bord replié vers l'intérieur relié à l'extrémité libre du tube de plus petit diamètre.

Dans ce cas, le tube de plus grand diamètre se déforme par retournement avec diminution de diamètre permettant ainsi d'absorber l'énergie lors d'un choc.

Ces absorbeurs de chocs permettent d'obtenir un effort constant au cours de l'enfoncement et présentent un rapport entre l'énergie absorbée et la masse tout à fait satisfaisant.

L'invention est définie par les revendications 1, 2, 3 ou 4. Les revendications 5 à 12 decrivent des modes d'execution de l'invention.

Le dispositif absorbeur de chocs est monté entre un pare-chocs et chaque longeron du véhicule automobile (revendication 13).

L'invention sera mieux comprise à la lecture de la description qui va suivre, donnée uniquement à titre d'exemple, pour la compréhension de laquelle on se référera aux dessins annexés dans lesquels :
- la Fig. 1 est une vue schématique en coupe d'un premier mode de réalisation d'un dispositif d'absorbeur de chocs selon l'invention,
- la Fig. 2 est une vue schématique en coupe montrant la déformation lors d'un choc du dispositif d'absorbeur de chocs de la Fig. 1,
- la Fig. 3 est une vue schématique en coupe d'un second mode de réalisation d'un dispositif absorbeur de chocs selon l'invention,
- la Fig. 4 est une vue schématique en coupe d'un troisième mode de réalisation d'un dispositif absorbeur de chocs selon l'invention,
- la Fig. 5 est une vue schématique en coupe d'un quatrième mode de réalisation d'un dispositif absorbeur de chocs selon l'invention,
- la Fig. 6 est une vue schématique en coupe d'un cinquième mode de réalisation d'un dispositif absorbeur de chocs selon l'invention,
- la Fig. 7 est une vue schématique en coupe d'un sixième mode de réalisation d'un dispositif absorbeur de chocs selon l'invention,
- la Fig. 8 est une vue schématique en coupe d'un septième mode de réalisation d'un dispositif absorbeur de chocs selon l'invention,
- la Fig. 9 est une vue schématique en coupe d'un huitième mode de réalisation d'un dispositif absorbeur de chocs selon l'invention,
- la Fig. 10 est une vue schématique en coupe d'un neuvième mode de réalisation d'un dispositif absorbeur de chocs selon l'invention.

Dans la description qui suit, on désignera par tube tout élément creux, axisymétrique, de forme allongée et de section quelconque comme par exemple, circulaire, ovale ou polygonale.

Ce tube peut être fabriqué par extrusion ou à partir d'une tôle roulée puis soudée ou également par emboutissage à partir d'une tôle plane.

Sur les figures, on a représenté schématiquement plusieurs modes de réalisation d'un dispositif absorbeur de chocs, notamment pour véhicules automobiles, disposé entre deux éléments 1 et 2 de transmission d'une poussée, comme par exemple un pare-chocs 1 et un longeron 2 du véhicule automobile.

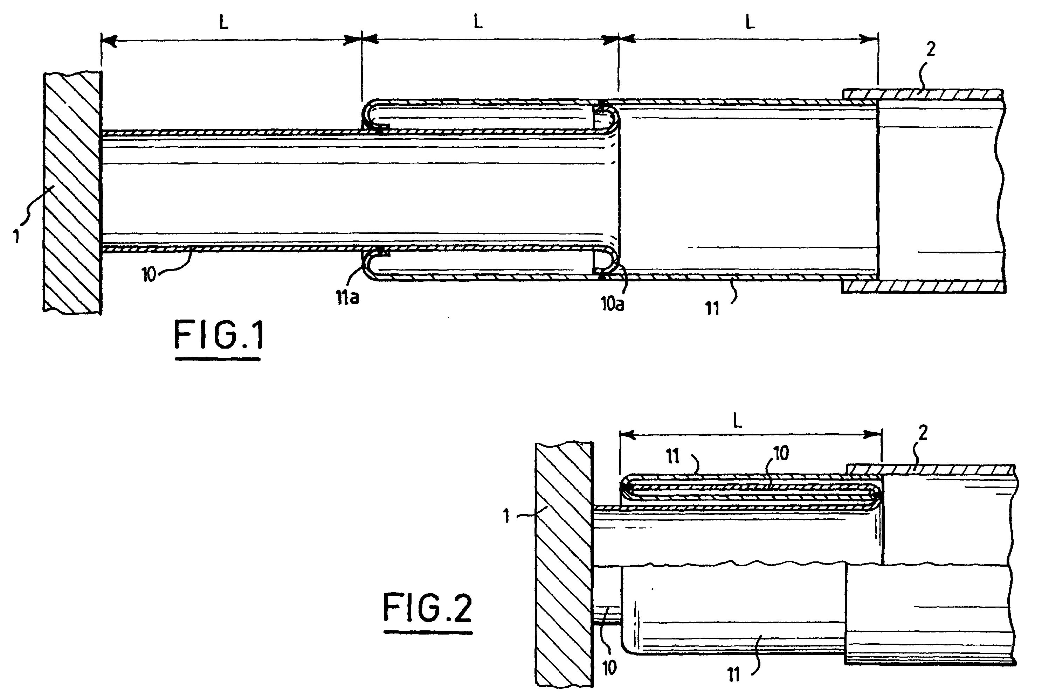

Selon les Figs. 1 à 8, le dispositif absorbeur de chocs selon l'invention comporte au moins deux tubes de diamètres différents, reliés l'un à l'autre et respectivement à l'un des éléments et à l'autre desdits éléments et des moyens d'initialisation, lors d'un choc de déformations simultanées par retournement avec augmentation de diamètre et avec diminution de diamètre, d'au moins un desdits tubes.

Selon un premier mode de réalisation représenté à la Fig. 1, le dispositif absorbeur de chocs comprend un premier tube 10 dont une extrémité est reliée au pare-chocs 1 et un second tube 11 dont une extrémité est reliée au longeron 2.

Les deux tubes 10 et 11 ont un même axe et le tube 10 possède un diamètre plus petit que le tube 11.

Les moyens d'initialisation d'au moins une déformation par retournement des tubes 10 et 11 sont formés par un bord 10a replié vers l'extérieur et ménagé à l'extrémité libre du tube 10 de plus faible diamètre et par un bord 11a replié vers l'intérieur et ménagé à l'extrémité libre du tube 11 de plus grand diamètre.

Les tubes 10 et 11 s'emboîtent l'un dans l'autre sur une portion L de leur longueur et le bord replié 10a est fixé par exemple par soudage sur le tube 11 tandis que le bord 11a est fixé par exemple par soudage sur le tube 10.

La distance séparant le bord 11a avec le pare-chocs 1 est égale à L et la distance séparant le bord 10a avec le longeron 2 est également égale à L.

Lors d'une poussée exercée sur le pare-chocs 1 par exemple lors d'un choc, comme représenté à la Fig. 2, les tubes 10 et 11 se déforment simultanément par retournement. Ainsi, des portions successives du tube 10 de plus faible diamètre se retournent vers l'extérieur de ce tube 10 grâce au bord 10a replié vers l'extérieur et se replient sur un angle de 180°, puis s'alignent de nouveau.

De plus, des portions successives du tube 11 de plus grand diamètre se retournent vers l'intérieur de ce tube 11 avec diminution de diamètre grâce au bord 11a replié, puis s'alignent de nouveau.

Le diamètre du tube 11 est supérieur au diamètre du tube 10 d'une quantité suffisante pour recevoir les parties rentrantes de ces tubes 10 et 11 comme représentés à la Fig. 2.

Ainsi, la course d'absorption d'énergie est sensiblement égale à 2L et la longueur des tubes 10 et 11 après repliage est égale à L si bien que l'absorption d'énergie est importante par rapport aux mouvements de l'extrémité du tube 10.

Dans ce mode de réalisation, un maintien latéral de l'absorbeur de chocs est assuré par les deux tubes 10 et 11 au cours de la déformation. Cette disposition présente un avantage par rapport à un tube travaillant seul et dont la zone de retournement constitue une faiblesse vis à vis des efforts transversaux.

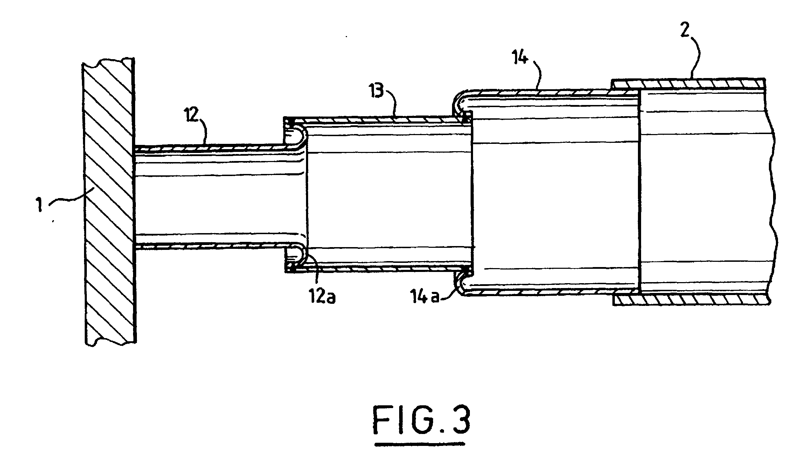

Selon un second mode de réalisation représenté à la Fig. 3, le dispositif absorbeur de chocs se compose d'un tube 12 dont une extrémité est reliée au pare-chocs 1, d'un tube 14 de plus grand diamètre que le tube 12 et dont une extrémité est reliée au longeron 2 et d'un tube intermédiaire 13 reliant les extrémités libres des tubes 12 et 14.

Le diamètre du tube intermédiaire 13 est compris entre les diamètres des tubes 12 et 14.

Dans ce mode de réalisation, le tube intermédiaire 13 est rigide.

L'extrémité libre du tube 12 de plus faible diamètre comporte un bord 12a replié vers l'extérieur de ce tube 12 et relié par exemple par soudage à une extrémité du tube intermédiaire 13 et l'extrémité libre du tube 14 de plus grand diamètre comporte un bord 14a replié vers l'intérieur dudit tube 14 et relié par exemple par soudage à l'autre extrémité du tube intermédiaire 13.

Lors d'une poussée exercée sur le pare-chocs 1 provoquée par une collision, les tubes 12 et 14 se déforment simultanément par retournement. Le tube 12 de plus faible diamètre se déforme, grâce au bord 12a replié vers l'extérieur, avec augmentation de diamètre et le tube 14 de plus grand diamètre se déforme, grâce au bord 14a replié vers l'intérieur, avec diminution de diamètre tandis que la longueur du tube intermédiaire 13 reste constante.

Ainsi, le tube 12 de plus faible diamètre se retourne progressivement et pénètre dans le tube intermédiaire 13 et le tube 14 de plus grand diamètre se retourne progressivement vers l'intérieur si bien que l'ensemble constitué par le tube intermédiaire 13 et le tube 12 de plus faible diamètre pénètre à l'intérieur du tube 14 de plus grand diamètre et absorbe de ce fait l'énergie.

Un des avantages de ce mode de réalisation réside dans le fonctionnement séquentiel des tubes 12 et 14 ce qui peut être avantageux dans certaines applications.

En effet, les petits chocs sont absorbés par le retournement du tube 12 seul et les chocs plus violents sont absorbés par le retournement simultané des tubes 12 et 14.

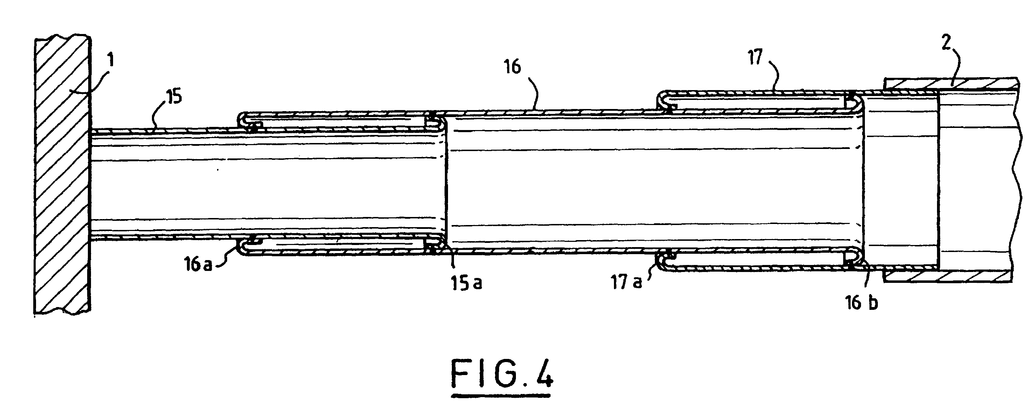

Selon un troisième mode de réalisation représenté à la Fig. 4, le dispositif absorbeur de chocs se compose d'un tube 15 dont une extrémité est reliée au pare-chocs 1, d'un tube 17 dont une extrémité est reliée au longeron 2 et d'un tube intermédiaire 16 reliant les deux tubes 15 et 17.

Le tube 17 a un diamètre supérieur au tube 15 et le diamètre du tube intermédiaire 16 est compris entre le diamètre du tube 15 et le diamètre du tube 17.

Les moyens d'initialisation d'au moins une déformation par retournement sont formés par un bord 15a replié vers l'extérieur et ménagé à l'extrémité libre du tube 15 de plus petit diamètre, par un bord 17a replié vers l'intérieur et ménagé à l'extrémité libre du tube 17 de plus grand diamètre et par le tube intermédiaire 16 reliant les bords 15a et 17a repliés. Ce tube intermédiaire 16 s'emboîte dans lesdits tubes 15 et 17 sur une portion de leur longueur, comme représenté à la Fig.4.

Par ailleurs, le tube intermédiaire 16 comporte à son extrémité disposée autour du tube 15 de plus faible diamètre un bord 16a replié vers l'intérieur et relié audit tube 15 de plus faible diamètre par exemple par soudage et à son extrémité disposée à l'intérieur du tube 17 de plus grand diamètre un bord 16b opposé au bord 16a et replié vers l'extérieur du tube intermédiaire 16.

Ce bord 16b replié vers l'extérieur est relié au tube 17 de plus grand diamètre par exemple par soudage.

De même, le bord 15a et le bord 17a sont reliés au tube intermédiaire 16 par exemple par soudage.

Lors d'une poussée exercée sur le pare-chocs 1 notamment lors d'une collision, une double absorption d'énergie se produit par l'ensemble constitué par le tube 15 de plus faible diamètre, par le tube intermédiaire 16 et par le tube 17 de plus grand diamètre, grâce à une déformation simultanée des tubes 15, 16 et 17.

En effet, le tube 15 de plus faible diamètre se déforme par retournement avec augmentation de diamètre grâce au bord plié 15a et le tube intermédiaire 16 se déforme par retournement avec diminution de diamètre grâce au bord 16a replié vers l'intérieur tandis que le tube 17 se déforme par retournement avec diminution de diamètre grâce au bord 17a replié vers l'intérieur et l'autre extrémité du tube intermédiaire 16 se déforme par retournement avec augmentation de diamètre grâce au bord 16b replié vers l'extérieur.

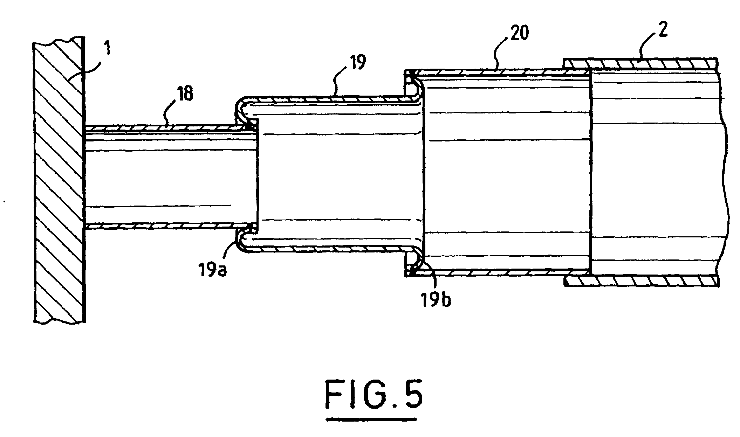

Selon un quatrième mode de réalisation représenté à la Fig. 5, le dispositif absorbeur de chocs se compose d'un tube 18 rigide dont une extrémité est reliée au pare-chocs 1, d'un tube 20 rigide dont une extrémité est reliée au longeron 2 et d'un tube intermédiaire 19 reliant les extrémités libres du tubes 18 et 20.

Le tube 20 a un diamètre supérieur au tube 18 et le tube intermédiaire 19 a un diamètre compris entre le diamètre du tube 18 et le diamètre du tube 20.

Les moyens d'initialisation d'au moins une déformation sont formés, dans ce cas, par le tube intermédiaire 19 qui comporte à son extrémité disposée autour du tube 18 de plus faible diamètre un bord 19a replié vers l'intérieur et relié à l'extrémité libre du tube 18 de plus faible diamètre par exemple par soudage et à son extrémité disposée à l'intérieur du tube 20 un bord 19b replié vers l'extérieur et relié au tube 20 de plus grand diamètre par exemple par soudage.

Lors d'une poussée exercée sur le pare-chocs 1, les deux extrémités du tube 19 se déforment simultanément. Ainsi, une partie du tube intermédiaire 19 se déforme par retournement avec diminution du diamètre grâce au bord 19a replié vers l'intérieur de telle sorte que le tube 18 pénètre à l'intérieur du tube intermédiaire 19 et une partie de ce tube intermédiaire 19 se déforme par retournement avec augmentation de diamètre grâce au bord 19b replié vers l'extérieur afin que l'ensemble constitué par le tube 18 et le tube intermédiaire 19 pénètre à l'intérieur du tube 20 de plus grand diamètre.

Ainsi, lors d'un choc, la double déformation par retournement du tube intermédiaire 19 absorbe une quantité d'énergie importante.

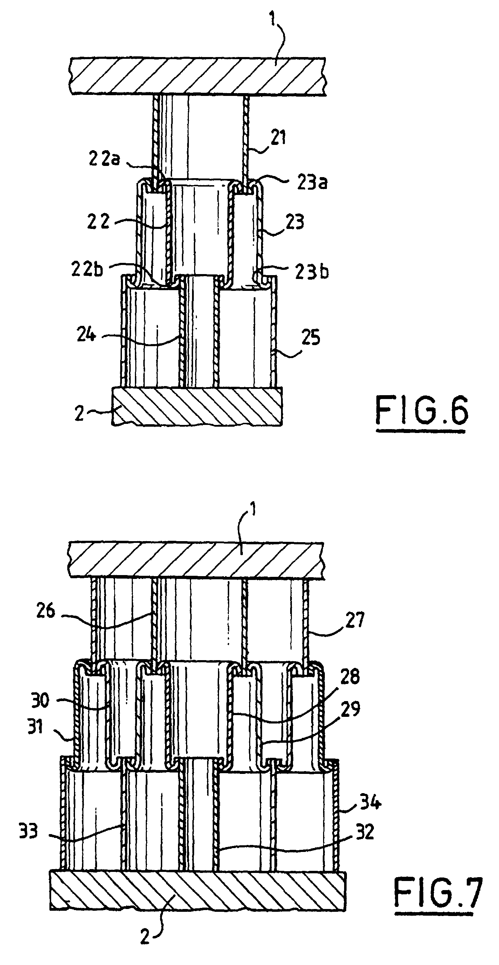

Selon un cinquième mode de réalisation représenté à la Fig. 6, le dispositif absorbeur de chocs se compose d'un tube 21 rigide dont une extrémité est reliée au pare-chocs 1 et de deux tubes rigides et concentriques, respectivement 24 et 25, ayant chacun une extrémité reliée au longeron 2.

Le tube 21 a un diamètre compris entre le diamètre du tube 24 et le diamètre du tube 25.

Dans ce mode de réalisation, les moyens d'initialisation d'au moins une déformation par retournement sont formés par deux tubes intermédiaires et concentriques, respectivement 22 et 23, reliant, d'une part, l'extrémité libre du tube 21 avec l'extrémité libre du tube 24 et l'extrémité libre du tube 21 avec l'extrémité libre du tube 25.

Le premier tube intermédiaire 22 comporte à l'une de ses extrémités un bord 22a replié vers l'extérieur et relié à l'extrémité libre du tube 21 par exemple par soudage et à l'autre de ses extrémités un bord 22b replié vers l'intérieur et relié à l'extrémité libre du tube 24 par exemple par soudage.

Le second tube intermédiaire 23 comporte à l'une de ses extrémités un bord 23a replié vers l'intérieur et relié à l'extrémité libre du tube 21 par exemple par soudage et à l'autre de ses extrémités un bord 23a replié vers l'extérieur et relié à l'extrémité libre du tube 25 par exemple par soudage.

Lors d'une poussée exercée sur le pare-chocs 1 notamment lors d'un choc, le tube 21 pénètre à l'intérieur des tubes intermédiaires 22 et 23 et une partie du tube 22 se déforme par retournement vers l'extérieur avec augmentation de diamètre grâce au bord 22a et une partie du tube 23 se déforme par retournement avec diminution de diamètre grâce au bord 23a.

De plus, une autre partie du tube intermédiaire 22 se déforme par retournement avec diminution de diamètre grâce au bord 22b et une autre partie du tube 23 se déforme par retournement avec augmentation de diamètre grâce au bord 23b.

Les différentes déformations simultanées des tubes intermédiaires 22 et 23 permettent d'absorber une quantité importante d'énergie.

Selon un sixième mode de réalisation représenté à la Fig. 7, le dispositif absorbeur de chocs se compose de deux tubes rigides et concentriques, respectivement 26 et 27, reliés au pare-chocs 1 et de trois tubes rigides et concentriques, respectivement 32, 33 et 34 reliés au longeron 2.

Dans ce mode de réalisation, les moyens d'initialisation d'au moins une déformation par retournement sont formés par quatre tubes intermédiaires, respectivement 28, 29, 30 et 31 reliant les extrémités libres des tubes 26 et 27 avec les extrémités libres des tubes 32, 33 et 34.

Les tubes intermédiaires 28 et 30 ont une forme identique au tube intermédiaire 22 du précédent mode de réalisation et les tubes intermédiaires 29 et 31 ont une forme identique au tube intermédiaire 23 de ce précédent mode de réalisation.

Ainsi, lors d'une poussée exercée sur le pare-chocs 1, les tubes intermédiaires 28, 29, 30 et 31 se déforment simultanément, d'une part, par retournement avec augmentation de diamètre et, d'autre part, par retournement avec diminution de diamètre ce qui permet d'absorber une quantité importante d'énergie.

Dans ce cas, le dispositif absorbeur de chocs comporte n tubes rigides, concentriques et reliés au pare-chocs 1, 2n tubes intermédiaires et 2n-1 tubes rigides concentriques et reliés au longeron 2, n étant supérieur ou égal à 2.

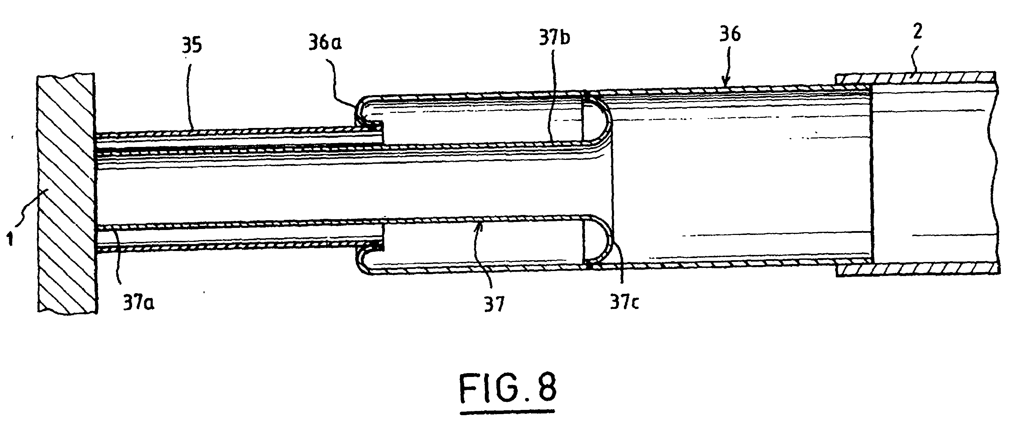

Selon un septième mode de réalisation représenté à la Fig. 8, le dispositif absorbeur de chocs comprend un premier tube 35 dont une extrémité est reliée au pare-chocs 1 et un second tube 36 dont une extrémité est reliée au longeron 2.

Les deux tubes 35 et 36 ont un même axe et le tube 35 possède un diamètre plus petit que le tube 36.

Dans ce mode de réalisation, le tube 35 est rigide.

L'extrémité libre du tube 36 de plus grand diamètre comporte un bord 36a replié vers l'intérieur de ce tube 36 et relié par exemple par soudage à l'extrémité libre du tube 35 de plus faible diamètre.

De plus, un tube intérieur 37 est disposé à l'intérieur des tubes 35 et 36, concentriquement à ces tubes.

Ce tube intérieur 37 a un diamètre inférieur au diamètre du tube 35.

Le tube intérieur 37 a une première extrémité 37a reliée au pare-chocs 1 et une seconde extrémité 37a disposée à l'intérieur du tube 36 de plus grand diamètre et à une distance déterminée du bord 36a replié dudit tube 36.

La seconde extrémité 37b du tube intérieur 37 comporte un bord 37c replié vers l'extérieur dudit tube 37 et relié au tube 36 de plus grand diamètre par exemple par soudage.

Lors d'une poussée exercée sur le pare-chocs 1 par exemple lors d'un choc, les tubes 36 et 37 se déforment simultanément par retournement.

Ainsi, des portions successives du tube 36 de plus grand diamètre se retournent vers l'intérieur de ce tube 36 avec diminution de diamètre grâce au bord 36a replié vers l'intérieur et se replient sur un angle de 180^{º}, puis s'alignent de nouveau.

De même, les portions successives du tube 37 se retournent vers l'extérieur de ce tube 37 avec augmentation de diamètre grâce au bord 37c replié, puis s'alignent de nouveau.

Ainsi, les différentes déformations simultanées des tubes 36 et 37 permettent d'absorber une quantité importante d'énergie.

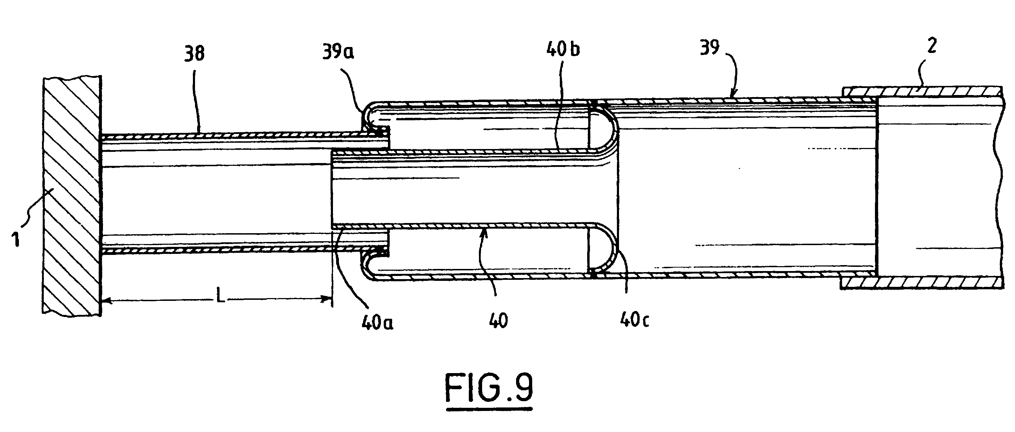

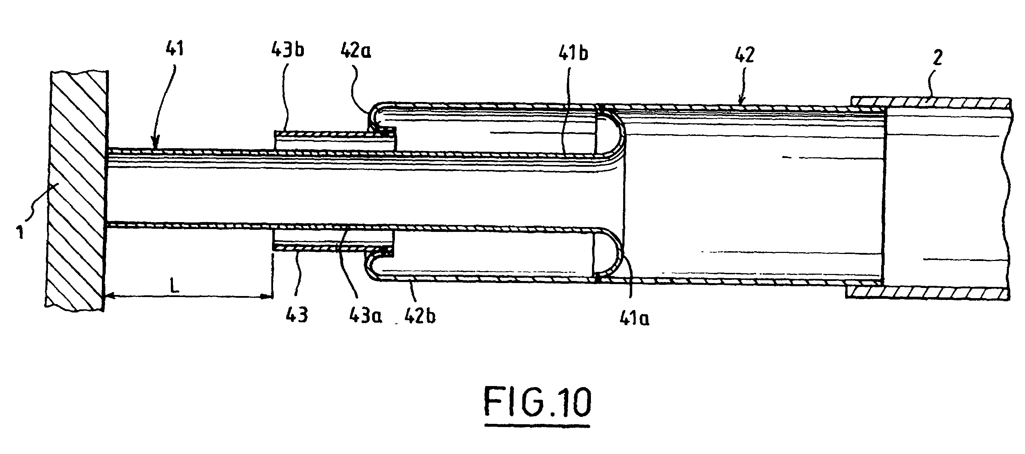

Sur les Figs. 9 et 10, on a représenté deux autres modes de réalisation d'un dispositif absorbeur de chocs selon l'invention qui comportent au moins deux tubes concentriques de diamètres différents dont le tube intérieur est en partie recouvert par le tube extérieur et reliés l'un à l'autre, le tube de plus grand diamètre étant relié à l'un desdits éléments, et des moyens d'initialisation, lors d'un choc, d'au moins une déformation par retournement avec augmentation de diamètre du tube de plus petit diamètre et avec diminution de diamètre du tube de plus grand diamètre.

Selon un huitième mode de réalisation représenté à la Fig. 9, le dispositif absorbeur de chocs comprend un premier tube 38 dont une extrémité est reliée au pare-chocs 1 et un second tube 39 dont une extrémité est reliée au longeron 2.

Les deux tubes 38 et 39 ont un même axe et le tube 38 possède un diamètre plus petit que le tube 39.

Dans ce mode de réalisation, le tube 38 est rigide.

L'extrémité libre du tube 39 de plus grand diamètre comporte un bord 39a replié vers l'intérieur de ce tube 39 et relié par exemple par soudage à l'extrémité libre du tube 38 de plus faible diamètre.

De plus, un tube intérieur 40 est disposé à l'intérieur des tubes 38 et 39, concentriquement à ces tubes.

Ce tube intérieur 40 a un diamètre inférieur au diamètre du tube 38.

Le tube intérieur 40 a une première extrémité libre 40a qui débouche à l'intérieur du tube 38 de plus faible diamètre à une distance L de l'extrémité dudit tube 38 reliée au pare-chocs 1 et une seconde extrémité 40b disposée à l'intérieur du tube 39 de plus grand diamètre et à une distance déterminée du bord 39a replié dudit tube 39.

La seconde extrémité 40b du tube intérieur 40 comporte un bord 40c replié vers l'extérieur dudit tube 40 et relié au tube 39 de plus grand diamètre par exemple par soudage.

Lors d'une poussée exercée sur le pare-chocs 1 par exemple lors d'une collision, dans un premier temps une partie du tube 39 de plus grand diamètre se déforme par retournement avec diminution de diamètre grâce au bord 39a replié vers l'intérieur de telle sorte que le tube rigide 38 pénètre à l'intérieur du tube 39 et autour du tube intérieur 40.

Dans un deuxième temps et si la poussée exercée sur le pare-chocs 1 se poursuit, une partie du tube intérieur 40 se déforme par retournement avec augmentation de diamètre grâce au bord 40c replié vers l'extérieur.

Le tube intérieur 40 n'est sollicité qu'à partir du moment où le tube 39 de plus grand diamètre a été retourné sur la distance L indiquée sur la Fig. 9.

Selon un neuvième mode de réalisation représenté à la Fig. 10, le dispositif absorbeur de chocs comprend un premier tube 41 dont une extrémité est reliée au pare-chocs 1 et un second tube 42 dont une extrémité est reliée au longeron 2.

Les tubes 41 et 42 ont un même axe et le tube 41 possède un diamètre plus petit que le tube 42.

Dans ce mode de réalisation, les moyens d'initialisation sont formés par un bord 41a replié vers l'extérieur du tube 41 et ménagé à l'extrémité libre 41b de ce tube 41.

Ce bord 41a replié vers l'extérieur est disposé à l'intérieur du tube 42 de plus grand diamètre et relié à ce tube 42 par exemple par soudage.

Les moyens d'initialisation sont également formés par un bord 42a replié vers l'intérieur du tube 42 et ménagé à l'extrémité libre 42b dudit tube 42.

Le bord 42a replié est relié par exemple par soudage à une première extrémité 43a d'un tube rigide 43 s'étendant vers le pare-chocs 1 et de diamètre compris entre les diamètres du premier tube 41 et du second tube 42.

L'extrémité libre 43b du tube rigide 43 est à une distance déterminée L du pare-chocs 1.

Lors d'une poussée exercée sur le pare-chocs 1 par exemple lors d'une collision, dans un premier temps une partie du tube 41 de plus petit diamètre se déforme par retournement avec augmentation de diamètre grâce au bord 41a replié vers l'extérieur.

Dans un deuxième temps et si la poussée exercée sur le pare-chocs 1 se poursuit, une partie du tube 42 de plus grand diamètre se déforme par retournement avec augmentation de diamètre grâce au bord 42a replié vers l'intérieur de telle sorte que le tube rigide 43 pénètre à l'intérieur du tube 42 et autour du tube 41.

Le tube extérieur 42 n'est sollicité qu'à partir du moment où l'extrémité libre 43b du tube rigide 43 entre en contact avec le pare-chocs 1.

Dans ces deux modes de réalisation, il en résulte un fonctionnement de l'absorbeur de chocs à deux niveaux d'effort, un premier niveau correspondant au fonctionnement du tube 39 ou 41 et un deuxième niveau correspondant à la somme des efforts nécessaires au retournement des tubes 39 et 40 ou 41 et 42 simultanément.

Suivant la distance L et la vitesse d'impact, le réglage dans le temps peut être ajusté.

Ces modes de réalisation sont intéressants pour absorber les petits chocs avec un retournement du tube 39 ou 41 seul et les chocs plus violents avec un retournement simultané des tubes 39 et 40 ou 41 et 42.

Dans l'ensemble des modes de réalisation précédemment décrits, les différents tubes sont en métal.

Le dispositif absorbeur de chocs selon l'invention est d'une construction peu coûteuse et d'un poids relativement faible et il présente une très bonne efficacité d'absorption d'énergie.

De plus, ce dispositif absorbeur de chocs permet d'obtenir un effort constant au cours de l'enfoncement et présente un rapport entre l'énergie absorbée et la masse particulièrement intéressant.

## Revendications

1. Dispositif absorbeur de chocs, notamment pour véhicules automobiles, disposé entre deux éléments (1, 2) de transmission d'une poussée et comportant au moins deux tubes rigides distincts (10, 11 ; 12, 14 ; 15, 17 ; 35, 36, 37) de diamètres différents reliés respectivement à l'un (1) des éléments et à l'autre (2) desdits éléments, **caractérisé en ce que** lesdits tubes sont solidarisés entre eux par des moyens d'initialisation (10a, 11a; 12a, 13, 14a; 15a, 16, 17a; 36a, 37a) lors d'un choc de déformations , un desdits tubes subissant une déformation par retournement avec augmentation de diamètre et l'autre de ces tubes subissant simultanément une déformation par retournement avec diminution de diamètre.

2. Dispositif absorbeur de chocs, notamment pour véhicules automobiles, disposé entre deux éléments (1, 2) de transmission d'une poussée et comportant au moins deux tubes rigides (15, 17 ; 18, 20 ; 21, 24, 25 ; 26, 27, 32, 33, 34) de diamètres différents reliés respectivement à l'un (1) des éléments et à l'autre (2) desdits éléments, **caractérisé en ce que** lesdits tubes sont solidarisés entre eux par des moyens d'initialisation (15a, 17a; 19a, b; 22a, b; 23a, b) lors d'un choc de déformations simultanées par retournement avec augmentation de diamètre et avec diminution de diamètre d'au moins un tube intermédiaire (16; 19 ; 22, 23 ; 28, 29, 30, 31) relié aux deux tubes rigides.

3. Dispositif absorbeur de chocs, notamment pour véhicules automobiles, disposé entre deux éléments (1, 2) de transmission d'une poussée et comportant au moins deux tubes rigides (38, 39) de diamètres différents, reliés respectivement à l'un (1) des éléments et à l'autre (2) desdits éléments, **caractérisé en ce que** lesdits tubes sont solidarisés entre eux par des moyens d'initialisation lors d'un choc de déformations par retournement d'un desdits tubes, lesdits moyens d'initialisation étant formés par un bord (39a), d'une part, replié à l'intérieur du tube (39) de plus grand diamètre relié au second élément (2) et d'autre part, relié à l'extrémité libre du tube (38) de plus petit diamètre relié au premier élément (1) et par un tube interne (40) concentrique aux tubes (38, 39) et comportant, d'une part, une première extrémité (40a) débouchant à l'intérieur du tube (38) de plus petit diamètre à une distance déterminée L de l'extrémité dudit tube (38) de plus petit diamètre reliée au premier élément et, d'autre part, une seconde extrémité (40b) disposée à l'intérieur du tube (39) de plus grand diamètre et relié audit tube (39) par un bord (40c) replié vers l'extérieur dudit tube interne (40).

4. Dispositif absorbeur de chocs, notamment pour véhicules automobiles, disposé entre deux éléments (1, 2) de transmission d'une poussée et comportant au moins deux tubes rigides (41, 42) de diamètres différents, reliés respectivement à l'un (1) des éléments et à l'autre (2) desdits éléments, **caractérisé en ce que** lesdits tubes sont solidarisés entre eux par des moyens d'initialisation lors d'un choc de déformations par retournement d'un desdits tubes, lesdits moyens d'initialisation étant formés par un bord (41a), d'une part, replié vers l'extérieur du tube (41) de petit diamètre, premier tube, relié au premier élément (1) et, d'autre part, ménagé à l'extrémité libre (41b) dudit tube disposé à l'intérieur du tube (42) de plus grand diamètre, second tube, et par un bord (42a) replié vers l'intérieur du second tube (42) et ménagé à l'extrémité libre (42b) dudit second tube, ledit bord (42a) étant relié à une extrémité (43a) d'un tube rigide (43) s'étendant vers le premier élément (1) et de diamètre compris entre les diamètres dudit premier tube (41) et dudit second tube (42) et dont l'extrémité libre (43b) est à une distance déterminée L dudit premier élément (1).

5. Dispositif selon la revendication 1, **caractérisé en ce que** les moyens d'initialisation sont formés par un bord (10a) replié vers l'extérieur et ménagé à l'extrémité libre du tube (10) de plus faible diamètre et par un bord (11a) replié vers l'intérieur et ménagé à l'extrémité libre du tube (11) de plus grand diamètre, lesdits tubes (10, 11) s'emboîtant l'un dans l'autre sur une portion de leurs longueurs et lesdits bords (10a, 11a) repliés de chaque tube (10, 11) étant fixés à l'autre tube.

6. Dispositif selon la revendication 1, **caractérisé en ce que** les moyens d'initialisation sont formés par un bord (12a) replié vers l'extérieur et ménagé à l'extrémité libre du tube (12) de plus faible diamètre, par un bord (14a) replié vers l'intérieur et ménagé à l'extrémité libre du tube (14) de plus grand diamètre et par au moins un tube intermédiaire (13) rigide reliant lesdits bords (12a, 14a) repliés.

7. Dispositif selon la revendication 1 **caractérisé en ce que** les moyens d'initialisation sont formés par un bord (15a) replié vers l'extérieur et ménagé à l'extrémité libre du tube (15) de plus faible diamètre, par un bord (17a) replié vers l'intérieur et ménagé à l'extrémité libre du tube (17) de plus grand diamètre et par un tube intermédiaire (16) reliant lesdits bords (15a, 17a) repliés et s'emboîtant dans lesdits tubes (15, 17) sur une portion de leur longueur, ledit tube intermédiaire (16) comportant à l'une de ses extrémités libres un bord (16a) replié vers l'intérieur relié au tube (15) de plus faible diamètre et à l'autre de ses extrémités un bord (16b) replié vers l'extérieur relié au tube (17) de plus grand diamètre.

8. Dispositif selon la revendication 1, **caractérisé en ce que** les moyens d'initialisation sont formés par un bord (36a), d'une part, replié vers l'intérieur du tube (36) de plus grand diamètre relié au second élément (2) et, d'autre part, relié à l'extrémité libre du tube (35) de plus petit diamètre relié au premier élément (1) et par un tube interne (37) concentrique aux tubes (35, 36) et comportant d'une part, une première extrémité (37a) reliée au premier élément (1) et d'autre part, une seconde extrémité (37b) disposée à l'intérieur du tube (36) de plus grand diamètre et reliée audit tube (36) par un bord (37b) replié vers l'extérieur dudit tube interne (37).

9. Dispositif selon l'une quelconque des revendications 1, 3 ou 4, **caractérisé en ce que** les deux tubes (10, 11 ; 36, 37 ; 41, 42) de diamètres différents sont concentriques et **en ce que** le tube intérieur (10 ; 37 ; 41) de plus petit diamètre relié au premier élément (1) est en partie recouvert par le tube extérieur (11 ; 36 ; 42) de plus grand diamètre relié au second élément (2).

10. Dispositif selon la revendication 2, **caractérisé en ce que** le tube intermédiaire (19) comporte à l'une de ses extrémités un bord (19a) replié vers l'intérieur et relié à l'extrémité libre du tube (18) de plus faible diamètre et à l'autre extrémité un bord (19b) replié vers l'extérieur et relié à l'extrémité libre du tube (20) de plus grand diamètre.

11. Dispositif selon la revendication 2, **caractérisé en ce qu'**il comprend un tube (21) relié au premier élément (1) et deux tubes (24, 25) rigides, concentriques reliés au second élément (2) et des moyens d'initialisation formés par un premier tube intermédiaire (22) comportant à l'une de ses extrémités un bord (22a) replié vers l'extérieur et relié à l'extrémité libre du tube (21) solidaire du premier élément (1) et à l'autre de ses extrémités un bord (22b) replié vers l'intérieur et relié au premier élément (24) solidaire du second élément (2) et par un second tube intermédiaire (23) concentrique au premier tube intermédiaire (22) et comportant à l'une de ses extrémités un bord (23a) replié vers l'intérieur et relié au tube (21) solidaire du premier élément (1) et à l'autre de ses extrémités un bord (23b) replié vers l'extérieur et relié au second tube (25) solidaire du second élément (2).

12. Dispositif selon la revendication 2, **caractérisé en ce qu'**il comporte n tubes (26, 27) rigides, concentriques et reliés au premier élément (1), 2n tubes intermédiaires (28, 29, 30, 31) et 2n-1 tubes (32, 33, 34) rigides concentriques et reliés au second élément (2), n étant supérieur ou égal à 2.

13. Dispositif selon l'une quelconque des revendications précédentes, **caractérisé en ce qu'**il est monté entre un pare-chocs (1) et chaque longeron du véhicule.

## Patentansprüche

1. Stoßabsorbiervorrichtung, insbesondere für Kraftfahrzeuge, die zwischen zwei Stoßübertragungselementen (1, 2) angeordnet ist und wenigstens zwei verschiedene starre Rohre (10, 11; 12, 14; 15, 17; 35, 36, 37) mit unterschiedlichen Durchmessern umfaßt, die mit dem einen (1) der Elemente bzw. mit dem anderen (2) der Elemente verbunden sind, **dadurch gekennzeichnet, daß** die Rohre bei einem Verformungsstoß über Initialisierungsmittel (10a, 11a; 12a, 13, 14a; 15a, 16, 17a; 36a, 37c) fest miteinander verbunden werden, wobei eines der Rohre eine Verformung durch Umstülpen mit Durchmessererhöhung erfährt und gleichzeitig das andere dieser Rohre eine Verformung durch Umstülpen mit Durchmesserverminderung erfährt.

2. Stoßabsorbiervorrichtung, insbesondere für Kraftfahrzeuge, die zwischen zwei Stoßübertragungselementen (1, 2) angeordnet ist und wenigstens zwei starre Rohre (15, 17; 18, 20; 21, 24, 25; 26, 27, 32, 33, 34) mit unterschiedlichen Durchmessern umfaßt, die mit dem einen (1) der Elemente bzw. mit dem anderen (2) der Elemente verbunden sind, **dadurch gekennzeichnet, daß** die Rohre bei einem Stoß mit gleichzeitigen Verformungen über Initialisierungsmittel (15a, 17a; 19a, b; 22a, b; 23a, b) fest miteinander verbunden werden, indem wenigstens ein Zwischenrohr (16; 19; 22, 23; 28, 29, 30, 31), das mit den beiden starren Rohren verbunden ist, mit Durchmessererhöhung und Durchmesserverringerung umgestülpt wird.

3. Stoßabsorbiervorrichtung, insbesondere für Kraftfahrzeuge, die zwischenzwei Stoßübertragungselementen (1, 2) angeordnet ist und wenigstens zwei starre Rohre (38, 39) mit unterschiedlichen Durchmessern umfaßt, die mit dem einen (1) der Elemente bzw. mit dem anderen (2) der Elemente verbunden sind, **dadurch gekennzeichnet, daß** die Rohre bei einem Verformungsstoß über Initialisierungsmittel durch Umstülpen eines der Rohre fest miteinander verbunden werden, wobei die Initialisierungsmittel gebildet sind aus einem Rand (39a), der einerseits in den Innenraum des Rohrs (39) mit größerem Durchmesser, das mit dem zweiten Element (2) verbunden ist, umgebogen ist, und andererseits mit dem freien Ende des Rohrs (38) mit kleinerem Durchmesser verbunden ist, das mit dem ersten Element (1) verbunden ist, und aus einem zu den Rohren (38, 39) konzentrischen Innenrohr (40), das einerseits ein erstes Ende (40a), das in einem bestimmten Abstand L vom Ende des Rohrs (38) mit kleinerem Durchmesser, das mit dem ersten Element verbunden ist, in den Innenraum des Rohrs (38) mit kleinerem Durchmesser mündet, und andererseits ein zweites Ende (40b), das im Innenraum des Rohrs (39) mit größerem Durchmesser angeordnet ist und mit dem Rohr (39) durch einen in den Außenraum des Innenrohrs (40) umgebogenen Rand (40c) verbunden ist, umfaßt.

4. Stoßabsorbiervorrichtung, insbesondere für Kraftfahrzeuge, die zwischen zwei Stoßübertragungselementen (1, 2) angeordnet ist und wenigstens. zwei starre Rohre (41, 42) mit unterschiedlichen Durchmessern umfaßt, die mit dem einen (1) der Elemente bzw. mit dem anderen (2) der Elemente verbunden sind, **dadurch gekennzeichnet, daß** die Rohre bei einem Verformungsstoß über Initialisierungsmittel durch Umstülpen eines der Rohre fest miteinander verbunden werden, wobei die Initialisierungsmittel gebildet sind aus einem Rand (41a), der einerseits in den Außenraum des Rohrs (41) mit kleinem Durchmesser, also des ersten Rohrs, das mit dem ersten Element (1) verbunden ist, umgebogen ist, und andererseits am freien Ende (41b) des im Innenraum des Rohrs (42) mit größerem Durchmesser, also des zweiten Rohrs, angeordneten Rohrs angebracht ist, und aus einem Rand (42a), der zum Innenraum des zweiten Rohrs (42) umgebogen ist und am freien Ende (42b) des zweiten Rohrs angebracht ist, wobei dieser Rand (42a) mit einem Ende (43a) eines starren Rohrs (43) verbunden ist, das sich zum ersten Element (1) erstreckt und einen Durchmesser besitzt, der zwischen den Durchmessern des ersten Rohrs (41) und des zweiten Rohrs (42) liegt, und dessen freies Ende (43b) sich in einem bestimmten Abstand L vom ersten Element (1) befindet.

5. Vorrichtung nach Anspruch 1, **dadurch gekennzeichnet, daß** die Initialisierungsmittel gebildet sind aus einem Rand (10a), der in den Außenraum des Rohrs (10) mit kleinerem Durchmesser umgebogen und am freien Ende dieses Rohrs (10) angebracht ist, sowie aus einem Rand (11a), der in den Innenraum des Rohrs (11) mit größerem Durchmesser umgebogen und am freien Ende dieses Rohrs (11) angebracht ist, wobei die Rohre (10, 11) auf einem Abschnitt ihrer Längen ineinandergeschoben sind und die umgebogenen Ränder (10a, 11a) jedes Rohrs (10, 11) am jeweils anderen Rohr befestigt sind.

6. Vorrichtung nach Anspruch 1, **dadurch gekennzeichnet, daß** die Initialisierungsmittel gebildet sind aus einem Rand (12a), der in den Außenraum des Rohrs (12) mit kleinerem Durchmesser umgebogen und am freien Ende dieses Rohrs (12) angebracht ist, aus einem Rand (14a), der in den Innenraum des Rohrs (14) mit größerem Durchmesser umgebogen und am freien Ende dieses Rohrs (14) angebracht ist, sowie aus wenigstens einem starren Zwischenrohr (13), das die umgebogenen Ränder (12a, 14a) verbindet.

7. Vorrichtung nach Anspruch 1, **dadurch gekennzeichnet, daß** die Initialisierungsmittel gebildet sind aus einem Rand (15a), der in den Außenraum des Rohrs (15) mit kleinerem Durchmesser umgebogen und am freien Ende des Rohrs (15) angebracht ist, aus einem Rand (17a), der in den Innenraum des Rohrs (17) mit größerem Durchmesser umgebogen und am freien Ende des Rohrs (17) angebracht ist, sowie aus einem Zwischenrohr (16), das die umgebogenen Ränder (15a, 17a) verbindet und auf einem Abschnitt der Länge der Rohre (15, 17) in diese eingeschoben ist, wobei das Zwischenrohr (16) an einem seiner freien Enden einen Rand (16a), der in den Innenraum umgebogen und mit dem Rohr (15) mit kleinerem Durchmesser verbunden ist, und am anderen seiner Enden einen Rand (16b), der in den Außenraum umgebogen und mit dem Rohr (17) mit größerem Durchmesser verbunden ist, umfaßt.

8. Vorrichtung nach Anspruch 1, **dadurch gekennzeichnet, daß** die Initialisierungsmittel gebildet sind aus einem Rand (36a), der einerseits in den Innenraum des Rohrs (36) mit größerem Durchmesser, das mit dem zweiten Element (2) verbunden ist, umgebogen ist, und andererseits mit dem freien Ende des Rohrs (35) mit kleinerem Durchmesser verbunden ist, das mit dem ersten Element (1) verbunden ist, und aus einem Innenrohr (37), das zu den Rohren (35, 36) konzentrisch ist und einerseits ein erstes Ende (37a), das mit dem ersten Element (1) verbunden ist, und andererseits ein zweites Ende (37b), das innerhalb des Rohrs (36) mit größerem Durchmesser angeordnet und mit dem Rohr (36) durch einen in den Außenraum des Innenrohrs (37) umgebogenen Rand (37b) verbunden ist, umfaßt.

9. Vorrichtung nach einem der Ansprüche 1, 3 oder 4, **dadurch gekennzeichnet, daß** die Rohre (10, 11; 36, 37; 41, 42) mit unterschiedlichen Durchmessern konzentrisch sind und daß das Innenrohr (10; 37; 41) mit kleinerem Durchmesser, das mit dem ersten Element (1) verbunden ist, durch das Außenrohr (11; 36; 42) mit größerem Durchmesser, das mit dem zweiten Element (2) verbunden ist, zum Teil abgedeckt ist.

10. Vorrichtung nach Anspruch 2, **dadurch gekennzeichnet, daß** das Zwischenrohr (19) an einem seiner Enden einen nach innen umgebogenen Rand (19a), der mit dem freien Ende des Rohrs (18) mit kleinerem Durchmesser verbunden ist, und am anderen Ende einen nach außen umgebogenen Rand (19b), der mit dem freien Ende des Rohrs (20) mit größerem Durchmesser verbunden ist, umfaßt.

11. Vorrichtung nach Anspruch 2, **dadurch gekennzeichnet, daß** sie ein Rohr (21), das mit dem ersten Element (1) verbunden ist, zwei starre, konzentrische Rohre (24, 25), die mit dem zweiten Element (2) verbunden sind, sowie Initialisierungsmittel umfaßt, die gebildet sind aus einem ersten Zwischenrohr (22), das an einem seiner Enden einen nach außen umgebogenen Rand (22a) besitzt, der mit dem freien Ende des mit dem ersten Element (1) fest verbundenen Rohrs (21) verbunden ist, und am anderen seiner Enden einen Rand (22b) besitzt, der nach innen umgebogen ist und mit dem mit dem zweiten Element (2) fest verbundenen ersten Rohr (24) verbunden ist, und aus einem zweiten Zwischenrohr, das zum ersten Zwischenrohr (22) konzentrisch ist und an einem seiner Enden einen nach innen umgebogenen Rand (23a) besitzt, der mit dem mit dem ersten Element (1) fest verbundenen Rohr (21) verbunden ist, und am anderen seiner Enden einen umgebogenen Rand (23b) besitzt, der nach außen umgebogen und mit dem mit dem zweiten Element (2) fest verbundenen zweiten Rohr (25) verbunden ist.

12. Vorrichtung nach Anspruch 2, **dadurch gekennzeichnet, daß** sie n starre konzentrische Rohre (26, 27), die mit dem ersten Element (1) verbunden sind, 2n Zwischenrohre (28, 29, 30, 31) und 2n - 1 konzentrische starre Rohre (32, 33, 34), die mit dem zweiten Element (2) verbunden sind, umfaßt, wobei n größer oder gleich 2 ist.

13. Vorrichtung nach einem der vorhergehenden Ansprüche, **dadurch gekennzeichnet, daß** sie zwischen einem Stoßfänger (1) und jedem Rahmenlängsträger des Fahrzeugs angebracht ist.

## Claims

1. Shock absorber, in particular for automotive vehicles, disposed between two thrust-transmitting elements (1, 2) and comprising at least two distinct rigid tubes (10, 11; 12, 14; 15, 17; 35, 36, 37) which have different diameters and are respectively connected to one (1) of the elements and to the other (2) of said elements, **characterised in that** said tubes are mutually attached by means for initialisation (10a, 11a; 12a, 13, 14a; 15a, 16, 17a; 36a, 37c) in the event of a deformation impact, one of said tubes being deformed by returning with an increase in diameter and the other of these tubes simultaneously being deformed by returning with a reduction in diameter.

2. Shock absorber, in particular for automotive vehicles, disposed between two thrust-transmitting elements (1, 2) and comprising at least two rigid tubes (15, 17; 18, 20; 21, 24, 25; 26, 27, 32, 33, 34) which have different diameters and are respectively connected to one (1) of the elements and to the other (2) of said elements, **characterised in that** said tubes are mutually attached by means for initialisation (15a, 17a; 19a, b; 22a, b; 23a, b) in the event of a simultaneous deformation impact by returning with an increase in diameter and with a reduction in diameter of at least one intermediate tube (16; 19; 22, 23; 28, 29, 30, 31) connected to the two rigid tubes.

3. Shock absorber, in particular for automotive vehicles, disposed between two thrust-transmitting elements (1, 2) and comprising at least two rigid tubes (38, 39) which have different diameters and are respectively connected to one (1) of the elements and to the other (2) of said elements, **characterised in that** said tubes are mutually attached by means for initialisation in the event of a returning deformation impact of one of said tubes, said initialisation means being formed by an edge (39a) on the one hand folded toward the interior of the tube (39) of greater diameter connected to the second element (2) and on the other hand connected to the free end of the tube (38) of smaller diameter connected to the first element (1) and by an internal tube (40) concentric with the tubes (3B, 39) and comprising, on the one hand, a first end (40a) opening inside the tube (38) of smaller diameter at a predetermined distance L from the end of said tube (38) of smaller diameter connected to the first element and, on the other hand, a second end (40b) disposed inside the tube (39) of greater diameter and connected to said tube (39) by an edge (40c) folded toward the exterior of said internal tube (40).

4. Shock absorber, in particular for automotive vehicles, disposed between two thrust-transmitting elements (1, 2) and comprising at least two rigid tubes (41, 42) which have different diameters and are respectively connected to one (1) of the elements and to the other (2) of said elements, **characterised in that** said tubes are mutually attached by means for initialisation in the event of a returning deformation impact of one of said tubes, said initialisation means being formed by an edge (41a) on the one hand folded toward the exterior of the tube (41) of small diameter, the first tube, connected to the first element (1) and, on the other hand, arranged at the free end (41b) of said tube disposed inside the tube (42) of greater diameter, the second tube, and by an edge (42a) folded toward the interior of the second tube (42) and arranged at the free end (42b) of said second tube, said edge (42a) being connected to one end (43a) of a rigid tube (43) extending toward the first element (1) and having a diameter between the diameters of said first tube (41) and of said second tube (42) and of which the free end (43b) is at a predetermined distance L from said first element (1).

5. Device according to claim 1, **characterised in that** the initialisation means are formed by an edge (10a) folded toward the exterior and arranged at the free end of the tube (10) of smaller diameter and by an edge (11a) folded toward the interior and arranged at the free end of the tube (11) of greater diameter, said tubes (10, 11) nesting in one another over a portion of their lengths and said folded edges (10a, 11a) of each tube (10, 11) being fixed to the other tube.

6. Device according to claim 1, **characterised in that** the initialisation means are formed by an edge (12a) folded, toward the exterior and arranged at the free end of the tube (12) of smaller diameter, by an edge (14a) folded toward the interior and arranged at the free end of the tube (14) of greater diameter and by at least one rigid intermediate tube (13) connecting said folded edges (12a, 14a).

7. Device according to claim 1, **characterised in that** the initialisation means are formed by an edge (15a) folded toward the exterior and arranged at the free end of the tube (15) of smaller diameter, by an edge (17a) folded toward the interior and arranged at the free end of the tube (17) of greater diameter and by an intermediate tube (16) connecting said folded edges (15a, 17a) and nesting in said tubes (15, 17) over a portion of their length, said intermediate tube (16) comprising, at one of its free ends, an edge (16a) which is folded toward the interior connected to the tube (15) of smaller diameter and, at the other of its ends, an edge (16b) folded toward the exterior connected to the tube (17) of greater diameter.

8. Device according to claim 1, **characterised in that** the initialisation means are formed by an edge (36a) on the one hand folded toward the interior of the tube (36) of greater diameter connected to the second element (2) and on the other hand connected to the free end of the tube (35) of smaller diameter connected to the first element (1) and by an internal tube (37) concentric with the tubes (35, 36) and comprising, on the one hand, a first end (37a) connected to the first element (1) and, on the other hand, a second end (37b) disposed inside the tube (36) of greater diameter and connected to said tube (36) by an edge (37b) folded toward the exterior of said internal tube (37).

9. Device according to any one of claims 1, 3 or 4, **characterised in that** the two tubes (10, 11; 36, 37; 41, 42) of different diameters are concentric and **in that** the internal tube (10; 37; 41) of smaller diameter connected to the first element (1) is partially covered by the external tube (11; 36; 42) of greater diameter connected to the second element (2).

10. Device according to claim 2, **characterised in that** the intermediate tube (19) comprises, at one of its ends, an edge (19a) folded toward the interior and connected to the free end of the tube (18) of smaller diameter and, at the other end, an edge (19b) folded toward the exterior and connected to the free end of the tube (20) of greater diameter.

11. Device according to claim 1, **characterised in that** it comprises a tube (21) connected to the first element (1) and two concentric rigid rubes (24, 25) connected to the second element (2) and initialisation means formed by a first intermediate tube (22) comprising, at one of its ends, an edge (22a) folded toward the exterior and connected to the free end of the tube (21) attached to the first element (1) and, at the other of its ends, an edge (22b) folded toward the interior and connected to the first element (24) attached to the second element (2) and by a second intermediate tube (23) concentric with the first intermediate tube (22) and comprising, at one of its ends, an edge (23a) 'folded toward the interior and connected to the tube (21) attached to the first element (1) and, at the other of its ends, an edge (23b) folded toward the exterior and connected to the second tube (25) attached to the second element (2).

12. Device according to claim 2, **characterised in that** it comprises n concentric rigid tubes (26, 27) connected to the first element (1), 2n intermediate tubes (28, 29, 30, 31) and 2n-1 concentric rigid tubes (32, 33, 34) connected to the second element (2), n being greater than or equal to 2.

13. Device according to any of the preceding claims, **characterised in that** it is fitted between a bumper (1) and each sill of the vehicle.
